(19) Europäisches Patentamt
European Patent Office
Office européen des brevets

(11)  EP 1 067 372 B1

(12)  **FASCICULE DE BREVET EUROPEEN**

(45) Date de publication et mention
de la délivrance du brevet:
**21.01.2004   Bulletin 2004/04**

(51) Int Cl.⁷: **G01J 5/20**

(21) Numéro de dépôt: **00401905.5**

(22) Date de dépôt: **04.07.2000**

(54) **Détecteur bolométrique à isolation électrique intermédiaire et procédé pour sa fabrication**

Bolometrischer Detektor mit elektrischer Zwischenisolation und Verfahren zu seiner Herstellung

Bolometric detector with intermediary electrical isolation and method for its manufacture

(84) Etats contractants désignés:
**DE GB IT**

(30) Priorité:  **08.07.1999   FR 9908862**

(43) Date de publication de la demande:
**10.01.2001   Bulletin 2001/02**

(73) Titulaire: **ULIS**
**38113 Veurey Voroize (FR)**

(72) Inventeurs:
• **Vilain, Michel**
**38450 St Georges de Commiers (FR)**

• **Yon, Jean-Jacques**
**38360 Sassenage (FR)**

(74) Mandataire: **Laurent, Michel et al**
**Cabinet LAURENT et CHARRAS,**
**20, rue Louis Chirpaz**
**B.P. 32**
**69131 Ecully Cédex (FR)**

(56) Documents cités:
**FR-A- 2 752 299        US-A- 5 367 167**
**US-A- 5 399 897**

## Description

## DOMAINE TECHNIQUE

La présente invention concerne un détecteur bolométrique ainsi qu'un procédé de fabrication de ce détecteur.

Elle s'applique notamment à l'imagerie infrarouge.

## ÉTAT DE LA TECHNIQUE ANTÉRIEURE

On connaît déjà des détecteurs de rayonnement infrarouge, généralement agencés sous forme matricielle et susceptibles de fonctionner à la température ambiante, c'est-à-dire sans refroidissement, contrairement aux dispositifs appelés « détecteurs quantiques ».

Ces détecteurs non refroidis utilisent habituellement la variation d'une propriété d'un matériau approprié, en fonction de la température, au voisinage de 300 K. Dans le cas des détecteurs bolométriques, cette propriété est la résistivité.

Un tel détecteur non refroidi associe généralement (a) des moyens d'absorption du rayonnement infrarouge et de conversion de ce dernier en chaleur, (b) des moyens d'isolation thermique du détecteur, qui permettent à celui-ci de s'échauffer, (c) des moyens de thermométrie qui, dans le cas d'un détecteur bolométrique, utilisent un élément résistif, et (d) des moyens de lecture des signaux électriques fournis par les moyens de thermométrie.

Les détecteurs destinés à l'imagerie infrarouge sont réalisés sous la forme d'une matrice de détecteurs élémentaires, cette matrice ayant une ou deux dimensions, sur un substrat qui est généralement en silicium et comporte des moyens de stimulation électrique des détecteurs élémentaires, par polarisation (« bias ») de ces derniers, et des moyens de détection et de pré-traitement des signaux électriques fournis par ces détecteurs élémentaires. Ces moyens de détection et de pré-traitement sont formés sur le substrat et constituent un circuit de lecture.

L'intégration monolithique des détecteurs au circuit de lecture correspondant est avantageuse du point de vue des coûts de fabrication. Toutefois, il est également possible d'hybrider une matrice de détecteurs élémentaires à ce circuit de lecture.

Un détecteur comprenant une matrice de détecteurs élémentaires et le circuit de lecture associé est généralement placé dans un boîtier et relié au milieu extérieur par des techniques classiques. Dans le boîtier, la pression est réduite pour limiter les pertes thermiques et ce boîtier est muni d'une fenêtre transparente aux rayonnements infrarouges à détecter.

Pour observer une' scène par l'intermédiaire de ce détecteur, on projette la scène, à travers une optique adaptée, sur la matrice de détecteurs élémentaires et des stimuli électriques cadencés sont appliqués, par l'intermédiaire du circuit de lecture (également prévu à cet effet), à chaque détecteur élémentaire ou à chaque rangée de tels détecteurs afin d'obtenir un signal électrique constituant l'image de la température atteinte par chaque détecteur élémentaire. Ce signal est traité de manière plus ou moins élaborée par le circuit de lecture puis éventuellement par un dispositif électronique placé à l'extérieur du boîtier afin d'engendrer une image de la scène observée.

Les performances et le coût des détecteurs bolométriques non refroidis dépendent essentiellement (1) de la maîtrise d'élaboration et d'intégration des matériaux bolométriques les plus performants, (2) de la maîtrise de la construction des microponts, structures légères et fragiles qui permettent d'isoler thermiquement les détecteurs élémentaires du circuit de lecture, (3) de la qualité de mise en oeuvre de ces détecteurs et de diverses fonctions de correction qui sont utilisées dans le circuit de lecture et dans d'autres dispositifs annexes et (4) de la maîtrise des techniques et du coût de conditionnement dans un boîtier.

La présente invention est liée au point (1) ci-dessus en ce qu'elle permet d'obtenir des détecteurs bolométriques très performants à l'aide de techniques relativement simples.

On connaît un détecteur bolométrique, généralement à base de silicium amorphe, par le document suivant :

[1] US 5 021 663 A (L.J. Hornbeck).

Ce détecteur connu présente divers inconvénients et en particulier ceux qui suivent : (1) un nombre important de couches différentes est nécessaire à sa fabrication, notamment deux couches électriquement conductrices parallèles, situées sur chaque face de la couche de matériau bolométrique du détecteur et (2) il n'est pas possible, dans une surface donnée, d'ajuster la résistance électrique de ce détecteur si ce n'est qu'en modifiant la résistivité ou l'épaisseur du matériau bolométrique.

On connaît aussi un autre détecteur bolométrique par le document suivant :

[2] US 5 367 167 A (W.F. Keenan).

Cet autre détecteur connu comprend deux électrodes coplanaires, qui sont situées sur la même face de la couche de matériau bolométrique (généralement en silicium amorphe), ainsi qu'une couche électriquement conductrice qui est située sur l'autre face de cette couche de matériau bolométrique. Cette couche conductrice a pour fonction d'absorber le rayonnement infrarouge que l'on veut détecter et doit être séparée du corps du détecteur par une couche électriquement isolante.

Le détecteur connu par le document [2] remédie à certains inconvénients du détecteur connu par le document [1] mais présente encore les inconvénients (1) et (2) mentionnés plus haut.

On connaît en outre un détecteur bolométrique à microponts par le document suivant auquel on se reportera :

[3] FR 2752299 A correspondant à EP 0828145 A et à la demande de brevet américain, numéro de série 08/905059 du 1er août 1997 (M. Vilain et J.J. Yon).

Le détecteur connu par ce document [3] ne présente pas les inconvénients (1) et (2) mentionnés plus haut: Il utilise une seule couche électriquement conductrice qui est directement en contact avec le matériau bolométrique. Les électrodes sont, dans ce cas, formées à partir de cette unique couche qui a également une fonction d'absorption optique.

La structure d'un détecteur élémentaire, conforme à l'enseignement du document [3] est plus simple que celle d'un détecteur réalisé conformément au document [1] bu [2] et permet un ajustement de la résistance électrique de ce détecteur dans une large gamme de résistances, pour une surface disponible de détecteur donnée ainsi que des épaisseur et conductivité données du matériau bolométrique utilisé.

L'optimisation de la résistance en vue d'obtenir un bon couplage avec le circuit de lecture peut donc être obtenue avec des contraintes limitées sur l'optimisation d'autres paramètres du détecteur à savoir (1) l'épaisseur du matériau bolométrique dont dépendent en partie la capacité thermique Cth et l'isolation thermique Rth du détecteur et donc la constante de temps thermique de ce détecteur, égale au produit de Cth par Rth et (2) la résistivité du matériau bolométrique dont dépend le coefficient TCR du matériau bolométrique c'est-à-dire la dérivée logarithmique de la résistance électrique de ce matériau par rapport à la température.

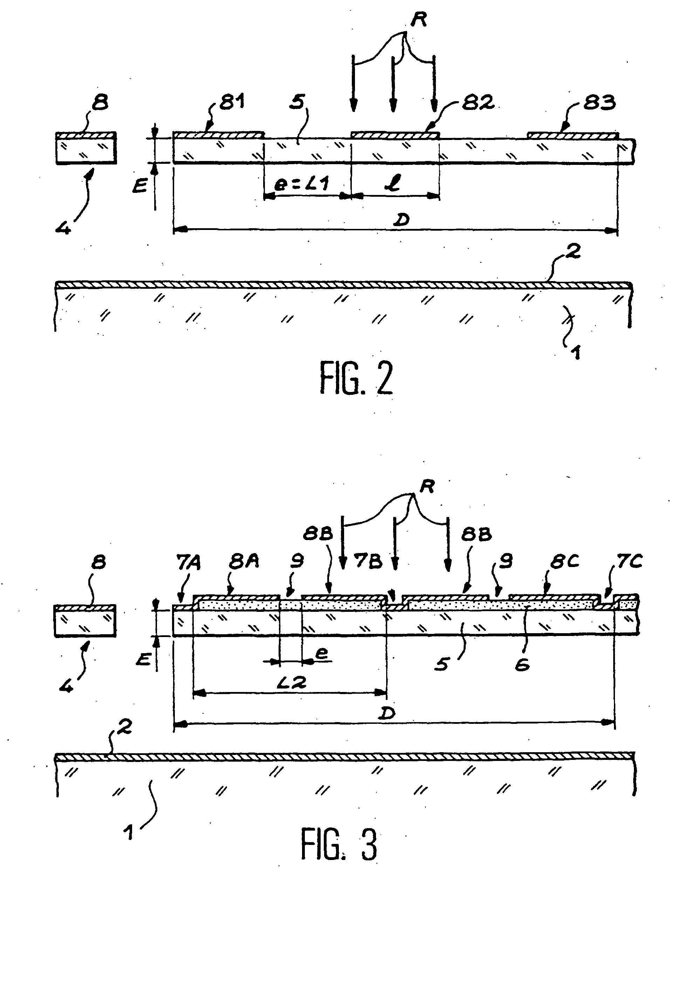

Il convient cependant de noter que le dessin des éléments électriquement conducteurs (électrodes de commande et éventuelles électrodes électriquement flottantes) doit obéir à des critères particuliers afin d'optimiser l'efficacité de la fonction d'absorption optique et finalement les performances du détecteur bolométrique : en particulier, le « pas » de ce dessin, c'est-à-dire la somme des valeurs $l$ et $e$ dans l'exemple de la figure 2 qui sera décrite par la suite, doit être compris entre 5 µm et 10 µm pour une détection optimisée de rayonnements infrarouges dont les longueurs d'onde sont comprises entre 8 µm et 14 µm. De plus, il est préférable que $l$ et $e$ aient des valeurs voisines. En effet, une diminution de $e$ conduit à une augmentation du niveau de bruit électrique et une augmentation de $e$ tend à diminuer ce niveau de bruit mais la perte d'absorption optique qui en résulte est prépondérante.

## EXPOSÉ DE L'INVENTION

La conception du détecteur bolométrique connu par le document [3] est valable du point de vue du compromis entre les performances et le coût, grâce à la simplicité de la structure de ce détecteur qui conduit à des rendements élevés, mais l'on a cherché à sensiblement améliorer ces performances au moyen d'un perfectionnement de cette structure.

La présente invention a précisément pour objet ce perfectionnement et propose un détecteur bolométrique ayant de grandes performances quel que soit le matériau bolométrique utilisé, par exemple le silicium amorphe, ou un matériau comparable, qui a naturellement un niveau élevé de bruit de basse fréquence, tout en conservant la plupart des avantages du détecteur bolométrique connu par le document [3].

Dans ce détecteur connu, on impose des contraintes géométriques aux surfaces des électrodes (largeur et pas).

Dans la présente invention, on s'affranchit de ces contraintes au moyen d'isolations électriques supplémentaires qui permettent de dissocier les contraintes, imposées à l'espace entre les électrodes, des contraintes sur l'absorption du rayonnement incident. On augmente ainsi les performances du détecteur par une diminution du bruit et une augmentation de l'absorption optique.

De façon précise, la présente invention a pour objet un détecteur bolométrique comprenant une couche de matériau bolométrique (matériau dont la résistivité varie en fonction de la température) et au moins deux électrodes formées en regard de la même face de cette couche de matériau bolométrique et à partir d'une même couche de matériau électriquement conducteur, ce détecteur étant caractérisé en ce que chacune des deux électrodes comprend au moins une première zone et au moins une deuxième zone, en ce que les deuxièmes zones appartenant respectivement aux deux électrodes sont électriquement isolées les unes des autres et électriquement isolées de la couche de matériau bolométrique et en ce que les premières zones appartenant respectivement aux deux électrodes sont espacées l'une de l'autre et en contact électrique avec cette couche de matériau bolométrique.

Selon un premier mode. de réalisation particulier du dispositif objet de l'invention, les deuxièmes zones sont électriquement isolées de la couche de matériau bolométrique par une couche de matériau électriquement isolant.

Ce matériau électriquement isolant est par exemple choisi dans le groupe comprenant le nitrure de silicium et la silice.

Selon un deuxième mode de réalisation particulier du dispositif objet de l'invention, les deuxièmes zones sont électriquement isolées de la couche de matériau bolométrique par un espace exempt de matière.

De préférence, le matériau bolométrique est choisi dans le groupe comprenant le silicium amorphe, les oxydes de vanadium, le SiGe amorphe et le $Si_xGe_y$-$C_z$ avec $x\geq0, y\geq0, z\geq0$ et $x+y+z=1$.

Le matériau électriquement conducteur est par exemple le nitrure de titane.

Selon un mode de réalisation préféré de l'invention, le détecteur bolométrique a une structure de micropont.

La présente invention concerne aussi un détecteur bolométrique à structure matricielle comprenant au moins deux détecteurs conformes à l'invention.

La présente invention concerne en outre un procédé de fabrication du détecteur bolométrique objet de l'invention, dans lequel on forme une première couche auxiliaire sacrificielle ("sacrificial") sur un substrat, on forme la couche de matériau bolométrique et les électrodes sur cette première couche auxiliaire, en isolant électriquement les deuxièmes zones des électrodes de la couche de matériau bolométrique, et l'on supprime la première couche auxiliaire.

Selon un premier mode de mise en oeuvre particulier du procédé objet de l'invention, on forme en outre la couche du matériau électriquement isolant pour séparer les deuxièmes zones de la couche de matériau bolométrique.

Selon un deuxième mode de mise en oeuvre particulier, on forme en outre une deuxième couche auxiliaire sacrificielle ("sacrificial") pour séparer les deuxièmes zones de la couche de matériau bolométrique et l'on supprime en outre cette deuxième couche auxiliaire.

**BRÈVE DESCRIPTION DES DESSINS**

La présente invention sera mieux comprise à la lecture de la description d'exemples de réalisation donnés ci-après, à titre purement indicatif et nullement limitatif, en faisant référence aux dessins annexés sur lesquels :

- La figure 1 est une vue en perspective schématique d'un mode de réalisation particulier du détecteur bolométrique objet de l'invention, comprenant deux électrodes parallèles,
- La figure 2 est une vue en coupe schématique d'un détecteur bolométrique conforme à l'enseignement du document [3],
- La figure 3 est une vue en coupe schématique d'un détecteur bolométrique conforme à l'invention,
- La figure 4 est une vue de dessus schématique d'un détecteur bolométrique conforme à l'enseignement du document [3], à deux électrodes interdigitées,
- La figure 5 est une vue de dessus schématique d'un détecteur bolométrique conforme à l'invention, à deux électrodes interdigitées et
- les figures 6A à 10B illustrent schématiquement diverses étapes d'un procédé de fabrication d'un détecteur bolométrique conforme à l'invention, les vues en coupe schématiques des figures 6A, 7A, 8A, 9A et 10A correspondant respectivement aux vues de dessus schématiques des figures 6B, 7B, 8B, 9B et 10B.

**EXPOSÉ DÉTAILLÉ DE MODES DE RÉALISATION PARTICULIERS**

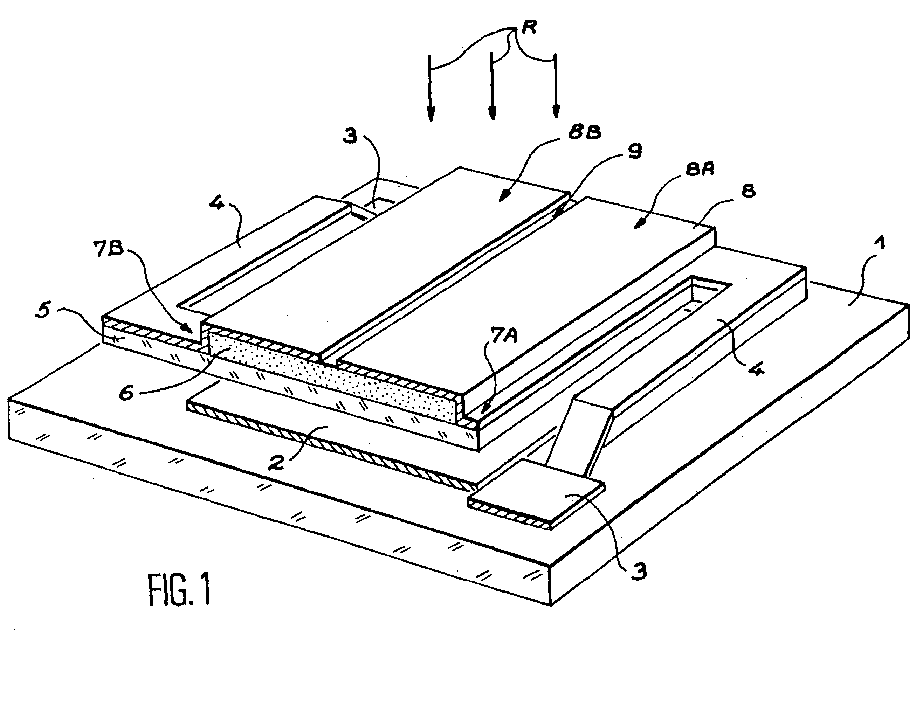

Sur les figures 1 à 10B les mêmes références représentent les mêmes éléments.

Le détecteur bolométrique conforme à l'invention, qui est schématiquement représenté en perspective sur la figure 1, comprend un substrat 1, par exemple en silicium, comprenant des dispositifs électroniques (non représentés), par exemple réalisés en technologie CMOS (ou une technologie analogue), ces dispositifs étant aptes à appliquer les stimuli qui sont nécessaires au fonctionnement du détecteur et à « lire » les informations issues du bolomètre ou des bolomètres faisant partie de ce détecteur.

De façon connue dans l'état de la technique, on peut disposer à la surface du substrat 1 une couche 2 optiquement réfléchissante dans le domaine infrarouge.

Un ou plusieurs bolomètres sont formés sur le substrat 1 (un seul bolomètre dans l'exemple de la figure 1), chaque bolomètre étant connecté mécaniquement au substrat 1 et électriquement aux dispositifs formés sur ce substrat, à l'aide d'au moins deux structures appropriées 3 (par exemple des piliers, de façon connue dans l'état de la technique), qui sont aptes à positionner le bolomètre correspondant à environ 2,5 $\mu$m de la surface du substrat lorsque ce dernier comporte la couche réfléchissante 2.

De façon connue dans l'état de la technique chaque bolomètre est isolé thermiquement du substrat et maintenu mécaniquement par rapport à ce dernier par l'intermédiaire d'au moins deux bras de support 4 qui sont respectivement reliés aux structures 3 comme on le voit sur la figure 1. En dehors des structures ou zones 3, l'espace compris entre le substrat et le bolomètre est exempt de matière : dans cet espace, on établit une faible pression d'un gaz lourd comme par exemple le xénon ou une pression gazeuse résiduelle (en plaçant le détecteur dans une enceinte mise sous vide).

Un tel détecteur constitue une structure à microponts.

Chaque bolomètre comprend aussi une couche 5 d'un matériau bolométrique (qui est donc résistif), dont l'épaisseur est de l'ordre de 50 nm à 100 nm et qui peut par exemple être faite de silicium amorphe dopé.

Ce bolomètre comprend aussi une couche 6 d'un matériau électriquement isolant (par exemple $SiO_2$) dont l'épaisseur est de l'ordre de 5 nm à 20 nm et qui est formée au-dessus de la couche 5. Cette couche 6 est éliminée jusqu'à la couche de matériau bolométrique 5 sur au moins deux zones 7A et 7B.

Chaque bolomètre comprend aussi une couche 8 de matériau électriquement conducteur qui est formée sur la couche électriquement isolante 6 et également sur la couche 5 au niveau des zones 7A et 7B. Cette couche conductrice 8 est éliminée jusqu'à la couche 6 sur au moins une zone 9 ayant une extension suffisante pour former dans chaque bolomètre, à partir de la couche 8 de celui-ci, au moins deux motifs conducteurs 8A, 8B électriquement isolés l'un de l'autre.

La couche 8 se prolonge sur les bras 4 pour relier les motifs conducteurs 8A et 8B respectivement aux zones 3 et donc aux dispositifs du substrat 1.

Chacun des deux motifs conducteurs 8A et 8B est associé à l'une des zones 7A et 7B (où se trouve la couche conductrice 8) pour former une électrode du détecteur. Ce dernier comprend ainsi deux électrodes 8A-7A et 8B-7B.

On voit sur la figure 1 que ce détecteur est orienté de façon que le rayonnement infrarouge R à détecter arrive en direction des électrodes du détecteur.

La figure 2 est une vue en coupe schématique d'un détecteur conforme à l'enseignement du document [3] et la partie isolée à gauche de cette figure représente une coupe à travers la structure d'isolation thermique (bras de support) suivant une configuration préférée. A titre de comparaison, la figure 3 est une vue en coupe schématique d'un détecteur conforme à l'invention.

Dans le cas de la figure 1 on a vu qu'il y avait deux électrodes 8A et 8B alors que dans la configuration plus générale de la figure 2 on aperçoit trois électrodes 81, 82 et 83 et, dans le cas de la figure 3 correspondant également à une configuration plus générale que la figure 1, on aperçoit aussi trois électrodes 8A-7A, 8B-7B et 8C-7C. Il convient de noter que certaines électrodes peuvent ne pas être connéctées au circuit de lecture. De tels motifs sont appelés « électrodes flottantes ».

On considère maintenant une modélisation simplifiée du détecteur conforme à l'invention de la figure 1. En fonctionnement, on applique à ce détecteur, au moyen des entrées électriques matérialisées par les zones 3, une tension de lecture $\underline{v}$. Il en résulte, en l'absence d'éclairement infrarouge du bolomètre unique que comporte le détecteur, le passage d'un courant dont l'intensité $\underline{i}$ est égale à v/R, R étant la résistance électrique du bolomètre vu entre les deux entrées 3.

Ce détecteur est caractérisé par le matériau bolométrique jouant le rôle de thermomètre car sa résistivité varie avec la température T. Cette variation est exprimée par le coefficient TCR égal à dR/(RdT). Pour le silicium amorphe ce coefficient est négatif: il est de l'ordre de -1,5%/K à -5%/K suivant le dopage du silicium amorphe.

Lors d'un éclairement infrarouge du bolomètre, une puissance optique dP est dissipée dans les électrodes servant d'absorbeur et communiquée à la couche de matériau bolométrique. Il en résulte une variation de courant di telle que :

$$di = TCR.i.Rth.dP.$$

Le bruit électrique dans la résistance R est la somme d'un bruit blanc (c'est-à-dire indépendant de la fréquence f), ayant la forme classique $\sigma i^2 = 4kT/R$ où k est la constante de Boltzman, et d'un bruit de basse fréquence typiquement régi par la loi de Hooge :

$$\sigma i^2(bf)/i^2 = \alpha/N.f$$

où $\alpha$ est le paramètre de Hooge (constant pour un matériau donné) et N est le nombre total de porteurs électriques qui sont impliqués dans le processus de conduction : N est égal à W.L.E.n où W et L sont respectivement la largeur électrique et la longueur électrique du bolomètre, E est l'épaisseur de la couche de matériau bolométrique et $\underline{n}$ est la densité volumique des porteurs mobiles de charge électrique. La densité spectrale de bruit de basse fréquence s'exprime donc par la formule suivante :

$$\sigma i^2(bf) = i^2.\alpha/n.(1/W.L.E)(1/f).$$

Le signal ou réponse di/dP est une fonction croissante de $\underline{i}$ et un utilisateur à intérêt à maximiser cette réponse, donc le courant i, pour des raisons de facilité de traitement analogique et/ou numérique dans le circuit de lecture.

Comme le bruit de basse fréquence est une fonction croissante de $\underline{i}$, le bolomètre est typiquement dominé par le bruit en 1/f dans des conditions optimales de fonctionnement, quasiment quel que soit le matériau bolométrique, et l'on peut, pour simplifier, négliger la contribution du bruit blanc dans la bande passante de lecture notée BPCL. Dans ces conditions on peut écrire que $\sigma i^2$ est peu différent de :

$$i^2.\alpha/n.(1/W.L.E).Log(BPCL).$$

Le rapport signal/bruit (di/dP)/σi est alors donné par la formule suivante :

$$(di/dP)/\sigma i = TCR.Rth/((\alpha/n)(1/W.L.E).Log(BPCL))^{1/2}.$$

La performance du bolomètre est exprimée par la résolution thermique NedT (pour « Noise equivalent differential Temperature »), cette résolution étant proportionnelle à la puissance équivalente de bruit notée NeP (pour « Noise equivalent Power »). Cette puissance équivalente de bruit est la puissance optique infrarouge dP telle que di soit égal à σi. On obtient ainsi :

$$NedT = k.\alpha.(W.L.E)^{-1/2}/(TCR.Rth).$$

En admettant la..bande passante de lecture fixée on voit que la performance du bolomètre est déterminée par les paramètres géométriques de construction constitués par

(1) Rth qui est défini par la configuration géométrique et les matériaux constitutifs des zones 4 de la figure 1, Rth devant être aussi élevé que possible,
(2) W, L et E dont le produit est égal au volume électriquement actif du matériau bolométrique, ce volume devant être maximum,
(3) TCR qui constitue la caractéristique de base du matériau bolométrique et doit être de préférence maximum et
(4) α qui doit être aussi faible que possible.

En comparant la valeur L1 de L dans le cas de la figure 2 à la valeur L2 de L dans le cas de la figure 3, l'épaisseur E étant la même pour les deux figures, on voit, d'une façon simplifiée, le principal avantage d'un détecteur conforme à l'invention : dans le cas de ce dernier, le volume électriquement actif ou volume utile W. L.E est sensiblement plus élevé.

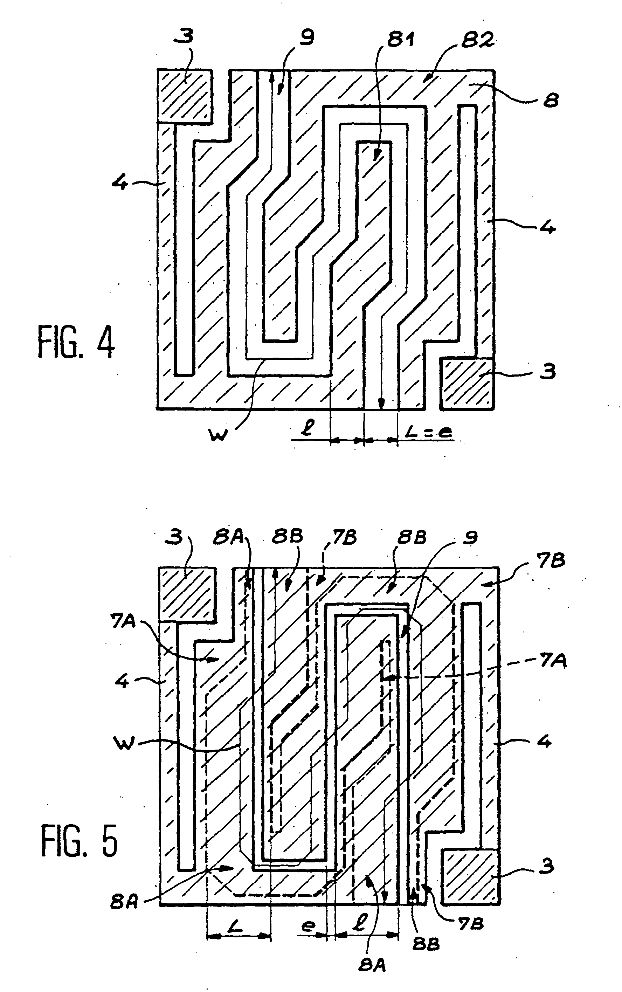

La figure 4 est une vue de dessus schématique d'un bolomètre conforme à l'enseignement du document [3] et comprenant deux motifs conducteurs 8A et. 8B interdigités. Cette configuration est choisie comme exemple mais l'homme de l'art vérifiera aisément que toute autre configuration de motifs conducteurs, établie conformément à l'enseignement du document [3], conduit, en l'adaptant à l'invention, à un niveau d'amélioration élevé.

On sait d'après le document [3] que l'espace e entre deux motifs conducteurs interdigités et la largeur l de chacun de ces deux motifs conducteurs doivent avoir à peu près la même valeur, de préférence de l'ordre de 4 μm, pour obtenir une absorption optique maximale (entre 90% et 95% en présence d'une cavité quart d'onde et d'un réflecteur parfait à la surface du substrat) dans la bande infrarouge allant de 8 μm à 14 μm. La résistance de couche des motifs conducteurs est de préférence voisine de 200Ω/carré. L'échelle des motifs conducteurs de la figure 4 conduit à des dimensions hors-tout du pixel représenté qui sont compatibles avec une configuration matricielle ayant un pas de 40 μm suivant deux directions orthogonales.

La figure 5 représente un bolomètre conforme à l'invention, de mêmes dimensions hors-tout que celui de la figure 4 et présentant le même type d'interdigitation des électrodes 8A-7A et 8B-7B. Les zones 7A et 7B de contact entre la couche conductrice 8 et la couche de matériau bolométrique 5 sont dessinées de façon à être aussi étroites que possible, par exemple avec une largeur de 1 μm.

La largeur e de l'espace 9 entre les deux électrodes interdigitées peut être à peu près égale à la largeur l des électrodes mais elle est avantageusement plus petite que cette largeur l comme dans le cas de la configuration illustrée par la figure 5, afin d'améliorer l'absorption optique des rayonnements infrarouges.

Un espace e par exemple de l'ordre de 2 μm est suffisant pour séparer les deux électrodes, sans risque excessif de court-circuit.

La résistance de couche (Rcarré) de la couche conductrice 8 doit dans ce cas être de l'ordre de 350 Ω/carré à 400 Ω/carré car la configuration de ces motifs conducteurs est quasiment continue.

La figure 5 représente un détecteur de configuration particulière, à interdigitation non rectiligne des zones 7A et 7B, d'une part pour suggérer les principales règles de mise en oeuvre de l'invention, qu'imaginera facilement l'homme de l'art et d'autre part pour montrer que les découpes 9 dans la couche conductrice 8 ne sont pas nécessairement situées dans l'axe central des espaces entre zones 7A et 7B. Il en résulte un certain degré de simplification du dessin, utile par exemple pour optimiser les rendements lithographiques (la longueur totale des découpes 9) ainsi que l'absorption optique (surface non métallisée minimale).

Les espaces entre les zones, de contact 7A et 7B sont dessinés de façon à avoir une largeur L approximativement constante, comme le suggère la figure 5, afin d'éviter l'existence de zones ayant un champ électrique plus élevé c'est-à-dire de zones où le niveau de bruit de basse fréquence serait plus important comme l'indique la loi de Hooge.

On remarquera que les zones d'isolation thermique 4 (les bras de support sur les figures 1 à 5) constituent une simple extension des zones 7A et 7B de la partie centrale du bolomètre. Cette caractéristique constitue une configuration préférée du fait de la simplicité de construction qui en résulte.

De cette manière, d'une part les contacts électriques sur le matériau bolométrique sont étendus de manière continue (sans « passage de marche » de la couche 6) jusqu'aux zones 3 de contact avec le circuit de lecture et d'autre part cela évite d'épaissir les bras d'isolement thermique par la couche 6.

La résistance thermique Rth idéale du bolomètre, toutes dimensions et matériaux équivalents par ailleurs, est alors inchangée par rapport au document [3].

Cette configuration préférée est particulièrement adaptée au cas où le matériau bolométrique est du silicium amorphe (ou un alliage apparenté) car un tel matériau présente toutes les qualités utiles à la réalisation des bras de maintien et d'isolation thermique.

Dans le cas où les détecteurs des figures 4 et 5 sont inscrits dans un carré de 50 μm de côté, le bolomètre représenté sur la figure 4 a une résolution thermique proportionnelle, suivant le modèle exposé, à 1/(W.L.E)$^{1/2}$, avec typiquement L=L1=4 μm et W=W1, W1 étant peu différent de 110 μm. Pour le bolomètre repré-

senté sur la figure 5, L=L2=7,5 μm et W=W2, W2 étant peu différent de 120 μm. La performance (NedT) par rapport à l'art antérieur de référence (figure 4) est donc représentée par le nombre $((L2.W2)/(L1.W1))^{1/2}$ qui est peu différent de 0,70.

On notera que l'amélioration est partiellement liée au fait que, suivant l'invention, les zones de contact 7A et 7B peuvent être rejetées sur les marges extrêmes du détecteur, contrairement au document [3] où la première bande conductrice en bordure de détecteur doit présenter, comme les autres bandes, une largeur de l'ordre de 4 μm pour produire une absorption à peu près uniforme sur le détecteur. Cela est explicité par la comparaison des figures 2 et 3 où des électrodes sont disposées dans un espace dont la longueur D est la même pour les figures 2 et 3. Relativement négligeable pour des pixels de grande taille de côté supérieur à 50 μm, cet effet est d'autant plus sensible que les dimensions du détecteur sont plus petites.

Par ailleurs, l'absorption optique moyenne au voisinage d'une longueur d'onde de 10 μm est plus élevée pour le détecteur de la figure 5. On peut obtenir de 90% à 95% d'absorption avec le détecteur de la figure 4 et théoriquement 100% avec celui de la figure 5 (sur les surfaces optiquement sensibles), pour une couche de matériau conducteur de résistance de couche (R carré) adéquate, occupant tout ou presque tout l'espace disponible, comme le permet l'invention. Il est raisonnable d'estimer un gain moyen de l'ordre de 5% sur la bande utile allant de 8 μm à 14 μm, compte tenu des surfaces optiquement inactives du détecteur (essentiellement les zones 3).

En outre l'ajustement de « Rcarré », qui est nécessaire à l'optimisation optique, conduit à réduire d'un facteur de l'ordre de 2 l'épaisseur de la couche conductrice utilisée dans l'invention, par rapport à un détecteur conforme au document [3]. Il en va de même sur les zones 4 dans le cas des configurations préférées qui sont représentée sur les figures 1 à 5, où ces zones (bras de support) ne comportent que la couche de matériau bolométrique et la couche conductrice. Il en résulte une augmentation de résistance thermique, toutes choses égales par ailleurs, de l'ordre de 9% à 17%, suivant les configurations de matériaux et d'épaisseurs suggérées dans l'exemple donné plus loin.

A partir d'un bolomètre conçu suivant le document [3] et amélioré suivant l'invention, on obtient une diminution directe, suivant l'exemple retenu, de l'ordre de 40% sur la résolution thermique NedT (de +14% à +23% sur la réponse et -30% sur le bruit). Ce niveau d'amélioration est valable quel que soit le matériau bolométrique résistif et la configuration d'électrodes.

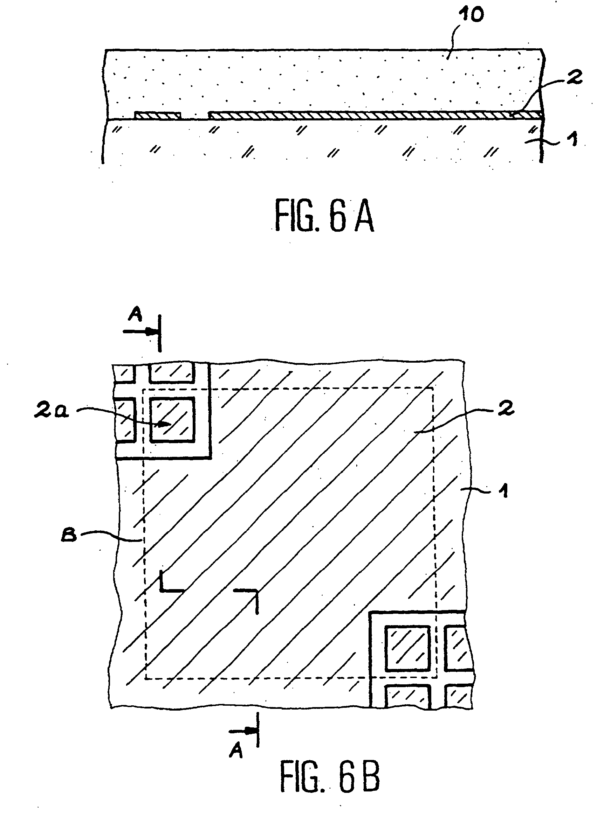

Les figures 6A à 10B illustrent schématiquement des étapes de fabrication d'un détecteur bolométrique conforme à l'invention, selon un mode de réalisation préféré.

En fait, bien qu'il soit question d'un détecteur dans ce qui suit, on peut former simultanément un grand nombre de détecteurs.

Des variantes sont possibles, par exemple en ce qui concerne l'ordre d'empilement des diverses couches et l'ordre d'enchaînement des niveaux lithographiques ainsi que le choix des matériaux et des procédés de dépôt, les gravures associées ainsi que les dimensions et les configurations des divers éléments du détecteur.

Les figures 6A, 7A, 8A, 9A et 10A représentent des étapes de l'élaboration du détecteur suivant une coupe à travers la structure de celui-ci. Cette coupe est la coupe AA (en trait mixte) des vues de dessus des figures 6B, 7B, 8B, 9B et 10B représentant des configurations des niveaux lithographiques associés aux diverses étapes. Les surfaces limitées par des traits épais sur ces figures 6B, 7B, 8B, 9B et 10B délimitent les surfaces protégées par chaque masque lithographique. La symétrie des pixels entre eux, dans l'exemple représenté, est avantageuse pour l'implantation de matrices de tels pixels ou bolomètres sur le substrat qui contient le circuit de lecture.

L'homme de l'art déduira aisément de ces figures d'autres configurations des niveaux lithographiques permettant d'obtenir d'autres détecteurs conformes à l'invention.

Les diverses techniques évoquées ne sont en général pas détaillées car il s'agit de techniques habituelles en microélectronique.

Lors d'une première étape (figures 6A et 6B) une couche 2 métallique et réfléchissante, par exemple en aluminium ou en or, est déposée directement à la surface du substrat 1 qui est par exemple en silicium et comporte les éléments actifs ou passifs (non représentés) du circuit de lecture associé au détecteur.

A l'aide d'un premier niveau lithographique représenté sur la figure 6B, un réflecteur est défini par gravure de cette couche 2 avec des moyens traditionnels.

Ensuite, suivant la configuration préférée, on dépose successivement trois couches superposées :

- une première couche 10 (figure 6A) faite d'un matériau apte à être ultérieurement supprimé, par exemple un polymère tel qu'un polyimide, cette couche 10. de polyimide étant recuite à une température adéquate pour supporter la suite du procédé, l'épaisseur de cette couche étant de préférence voisine de 2,5 μm afin d'assurer l'effet quart-d'onde de la cavité optique induite entre le réflecteur et le corps du détecteur qui est ensuite élaboré à la surface de la couche de polyimide,

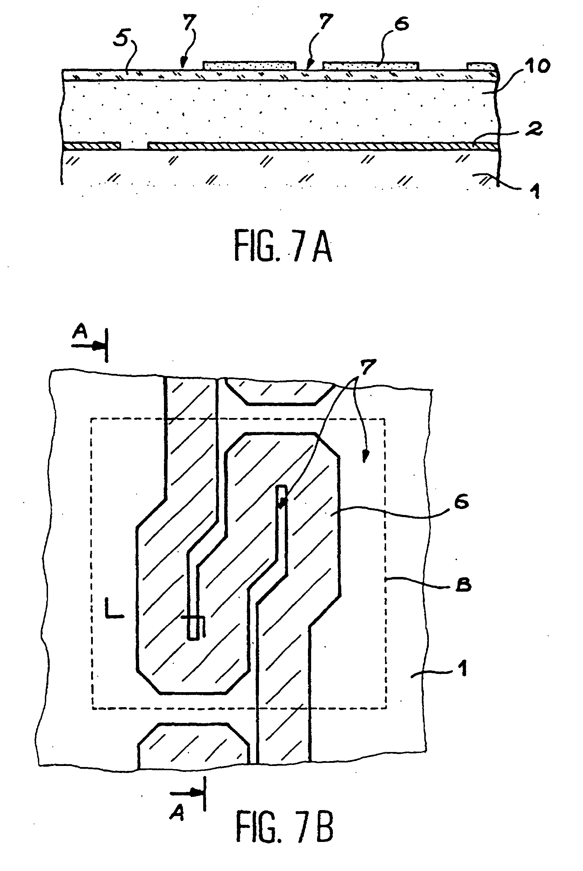

- une deuxième couche 5 (figure 7A), constituée du matériau bolométrique, par exemple du silicium amorphe dopé, ou un alliage apparenté, ayant une épaisseur par exemple de l'ordre de quelques dizaines à quelques centaines de nanomètres, la résistivité et l'épaisseur de cette couche 5 étant déterminées au moyen de critères qui sortent du cadre de l'invention, par exemple la résistance électrique ou la rigidité mécanique du détecteur, et

- une troisième couche 6 électriquement isolante (figure 7A), par exemple en nitrure de silicium ou de préférence (pour des raisons de qualité d'isolation diélectrique) en oxyde de silicium.

L'épaisseur de cette couche 6 doit être suffisante (de l'ordre de 5 nm à 20 nm) pour résister, sans fuite préjudiciable entre les électrodes et le matériau bolométrique, aux tensions de fonctionnement appliquées au détecteur (qui sont de l'ordre de quelques volts).

Cette couche 6 peut aussi être constituée d'un polymère comme par exemple le polyimide.

On précise que le carré B délimité par des pointillés sur les figures 6A à 10B délimite un détecteur élémentaire ou bolomètre ou pixel du détecteur et que les zones telles que la zone 2a (figure 6B) sont formées à partir de la couche 2 en vue de la formation ultérieure des zones de contact ou structures de connexion 3.

A l'aide d'un deuxième niveau lithographique représenté sur la figure 7B, la couche 6 est éliminée de zones 7 (servant à obtenir ultérieurement les zones 7A, 7B et 7C dont il a été question plus haut), à l'aide d'un procédé de gravure adéquat, sélectif par rapport au matériau bolométrique. La largeur de ces zones 7, sans être nécessairement uniforme, est aussi réduite que possible et vaut par exemple 1 μm dans les sections les plus étroites. En outre, dans une configuration préférée, représentée sur la figure 7B, on élimine cette couche 6 des surfaces ultérieurement occupées par les bras de maintien 4 et les zones 3 de contact avec le circuit de lecture.

Sur toute la surface est ensuite déposée une couche électriquement conductrice 8, par exemple faite d'un métal tel que le nitrure de titane, matériau facile à obtenir en couches très fines de résistivité prédéfinie au moyen de méthodes traditionnelles. La résistance (Rcarré) de cette couche 8 est ajustée suivant la nature du dessin du niveau lithographique suivant.

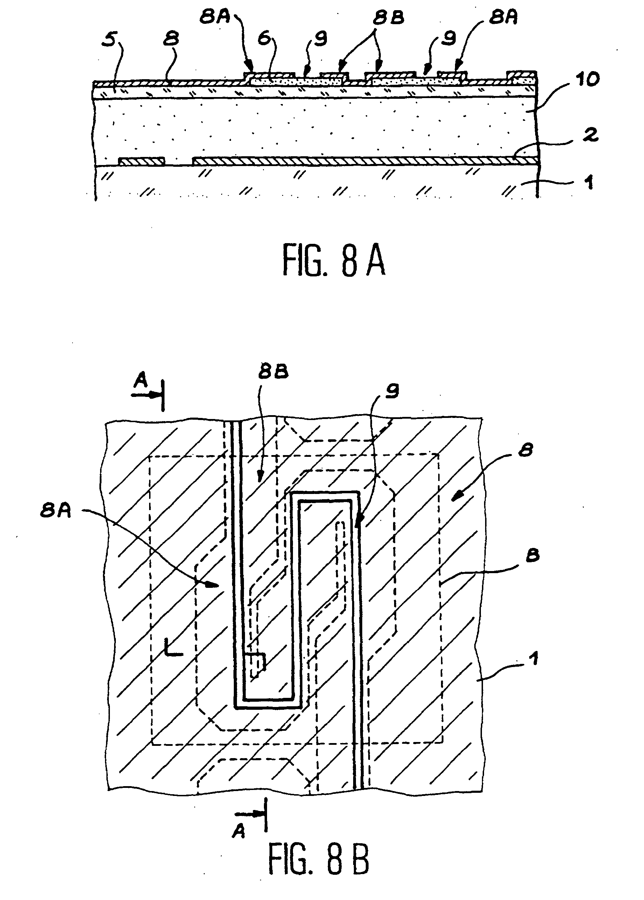

A l'aide d'un troisième niveau lithographique représenté sur la figure 8B, la couche conductrice 8 est gravée sélectivement par rapport à la couche 6 par des moyens traditionnels pour obtenir les zones 8A et 8B, comme on l'a représenté sur la figure 8A. On réalise ainsi la séparation des électrodes du détecteur. Ce niveau lithographique est avantageusement dessiné avec des espaces ouverts 9 relativement étroits, par exemple de largeur égale à 2 μm.

Dans le cas où les espaces et les largeurs des motifs métalliques après gravure sont voisins, la couche 8 est ajustée au voisinage de 200Ω/carré.

Pour former cette couche 8, on peut par exemple utiliser 8 nm de nitrure de titane ayant une résistivité de l'ordre de 130 μΩcm à 160 μΩcm.

Dans la configuration préférée à espaces étroits, on peut utiliser environ 4 nm de ce même matériau et, dans cette configuration préférée, les bras de maintien 4 comportent par exemple 50 à 100 nm de silicium amorphe et 4 nm de TiN.

En retenant des valeurs typiques de conductivité thermique de 2W/mK pour le silicium et 5W/mK pour le TiN (compte tenu de sa résistivité), un calcul simple montre que la différence de résistance thermique entre les deux cas précédents est comprise entre environ 9% et 17%, suivant l'épaisseur de silicium amorphe. L'invention procure donc un avantage non négligeable dans cette configuration préférée de dessin de motifs conducteurs et de conformation des bras de maintien.

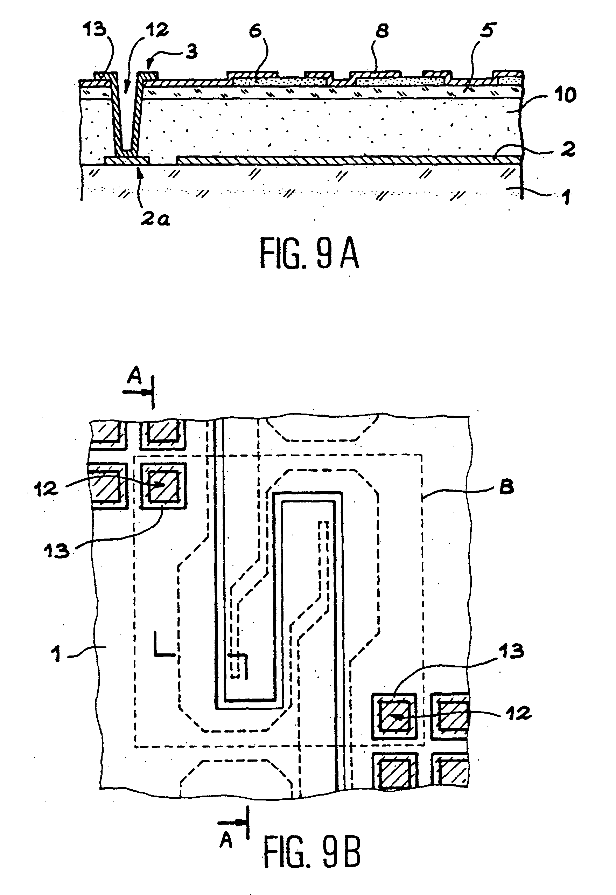

A l'aide d'un quatrième niveau lithographique, des ouvertures 12 sont pratiquées par gravure, sèche de préférence, successivement à travers les couches 8, 5 et 10, jusqu'à déboucher sur certains motifs métallisés 2a du premier niveau lithographique, comme on l'a représenté sur la figure 9A.

Une couche conductrice 13, par exemple. faite d'un métal tel que l'aluminium, est ensuite déposée uniformément. Cette couche recouvre de manière continue le fond et les flancs des ouvertures 12. Pour faciliter ce recouvrement, les ouvertures 12 sont de préférence réalisées avec des flancs inclinés, selon une configuration connue.

Cette couche 13 est gravée très sélectivement par rapport aux couches 8 et 6 par un procédé standard, à l'aide du cinquième niveau lithographique, que l'on voit avec le quatrième niveau lithographique sur la figure 9B.

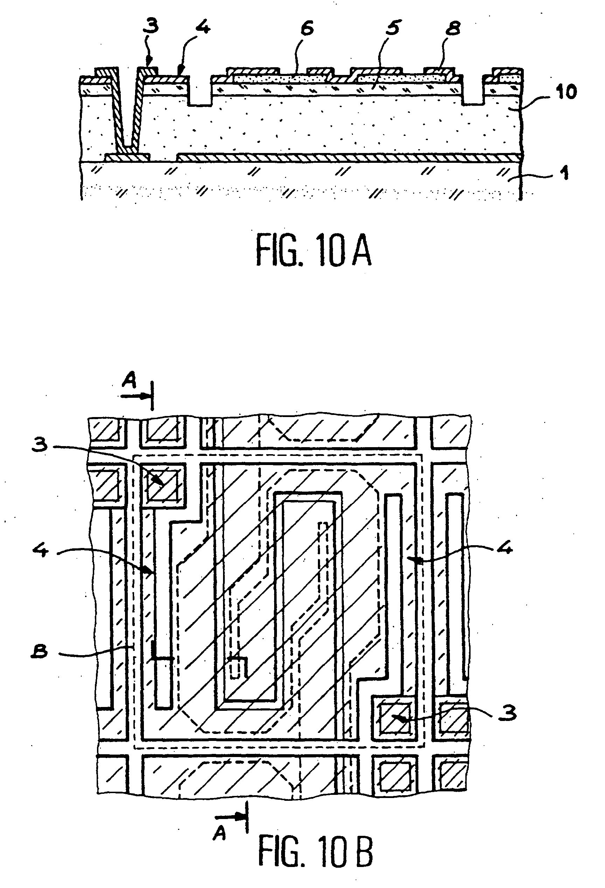

A l'aide d'un sixième niveau lithographique représenté sur la figure 10B, dans la configuration préférée, les contours de chaque détecteur et les bras d'isolation thermique sont définis par gravure, sèche de préférence, des couches 8, 6 et 5. Cette gravure est typiquement poursuivie jusque dans l'épaisseur de la couche de polyimide 10, comme le montre la figure 10A, afin d'assurer la découpe complète des couches 8, 6 et 5 suivant les contours du masque.

Les circuits d'imagerie sont ensuite séparés sous forme de puces (« chips ») individuelles et finalement la couche 10 de polyimide est éliminée par un procédé de combustion sous plasma d'oxygène ou analogue, afin de libérer les bolomètres, qui ne sont alors plus maintenus que par les piliers 3 prolongés par les bras de soutien 4.

Dans le cas où la couche 6 est constituée d'un polymère, elle sera également éliminée au cours de cette étape. Dans ce cas les couches 5 et 8 se retrouvent isolées l'une de l'autre par un espace exempt de matière.

Les opérations habituelles de report sur une embase munie des métallisations adéquates puis de fixation (« bonding ») des connexions électriques du circuit et enfin d'intégration dans une enceinte dans laquelle on fait le vide et qui est munie d'une fenêtre transparente au rayonnement infrarouge complètent le processus de fabrication.

**Revendications**

1. Détecteur bolométrique comprenant une couche de matériau bolométrique (5) et au moins deux électrodes formées en regard de la même face de cette couche de matériau bolométrique et à partir d'une même couche de matériau électriquement conducteur (8), ce détecteur étant **caractérisé en ce que** chacune des deux électrodes comprend au moins une première zone (7A, 7B) et au moins une deuxième zone (8A, 8B, 8C), **en ce que** les deuxièmes zones appartenant respectivement aux deux électrodes sont électriquement isolées les unes des autres et électriquement isolées de la couche de matériau bolométrique (5) et **en ce que** les premières zones appartenant respectivement aux deux électrodes sont espacées l'une de l'autre et en contact électrique avec cette couche de matériau bolométrique (5).

2. Détecteur selon la revendication 1, dans lequel les deuxièmes zones (8A, 8B, 8C) sont électriquement isolées de la couche de matériau bolométrique (5) par une couche de matériau électriquement isolant (6).

3. Détecteur selon la revendication 2, dans lequel le matériau électriquement isolant est choisi dans le groupe comprenant le nitrure de silicium et la silice.

4. Détecteur selon la revendication 1, dans lequel les deuxièmes zones (8A, 8B, 8C) sont électriquement isolées de la couche de matériau bolométrique (5) par un espace exempt de matière.

5. Détecteur selon l'une quelconque des revendications 1 à 4, dans lequel le matériau bolométrique est choisi dans le groupe comprenant le silicium amorphe, les oxydes de vanadium, le SiGe amorphe et le $Si_xGe_yC_z$ avec $x \geq 0$, $y \geq 0$, $z \geq 0$ et $x+y+z=1$.

6. Détecteur selon l'une quelconque des revendications 1 à 5, dans lequel le matériau électriquement conducteur est le nitrure de titane.

7. Détecteur selon l'une quelconque des revendications 1 à 6, ayant une structure de micropont.

8. Détecteur bolométrique à structure matricielle, comprenant au moins deux détecteurs selon l'une quelconque des revendications 1 à 7.

9. Procédé de fabrication du détecteur bolométrique selon la revendication 1, dans lequel on forme une première couche auxiliaire sacrificielle (10) sur un substrat (1), on forme la couche de matériau bolométrique (5) et les électrodes sur cette première couche auxiliaire, en isolant électriquement les deuxièmes zones des électrodes de la couche de matériau bolométrique, et l'on supprime la première couche auxiliaire.

10. Procédé selon la revendication 9, pour la fabrication du détecteur selon la revendication 2, dans lequel on forme en outre la couche du matériau électriquement isolant (6) pour séparer les deuxièmes zones de la couche de matériau bolométrique (5).

11. Procédé selon la revendication 9, pour la fabrication du détecteur selon la revendication 4, dans lequel on forme en outre une deuxième couche auxiliaire sacrificielle (6) pour séparer les deuxièmes zones de la couche de matériau bolométrique (5) et l'on supprime en outre cette deuxième couche auxiliaire (6).

**Claims**

1. Bolometric detector comprising a layer of bolometric material (5) and at least two electrodes formed facing the same face of this layer of bolometric material and starting from the same layer of electrically conducting material (8), this detector being **characterized in that** each of the two electrodes comprises at least one first area (7A, 7B) and at least one second area (8A, 8B, 8C) **in that** the second areas belonging to the two electrodes respectively are electrically isolated from each other and electrically isolated from the layer of bolometric material (5), and **in that** the first areas belonging to the two electrodes are at a spacing from each other and are in electrical contact with this layer of bolometric material (5).

2. Detector according to claim 1, in which the second areas (8A, 8B, 8C) are electrically isolated from the layer of bolometric material (5) by a layer of electrically insulating material (6).

3. Detector according to claim 2, in which this electrical insulating material is chosen from the group comprising silicon nitride and silica.

4. Detector according to claim 1, in which the second areas (8A, 8B, 8C) are electrically insulated from the layer of bolometric material (5) by a space in which there is no material.

5. Detector according to any one of claims 1 to 4, in which the bolometric material is chosen in the group comprising amorphous silicon, vanadium oxides, amorphous Si Ge, and $Si_xGe_yC_z$ where $x \geq 0$, $y \geq 0$, $z \geq 0$ and $x+y+z = 1$.

6. Detector according to anyone of claims 1 to 5, in which the electrically conducting material is titanium nitride.

7. Detector according to anyone of claims 1 to 6, with a microbridge structure.

8. Bolometric detector with a matrix structure comprising at least two detectors according to anyone of claims 1 to 7.

9. Manufacturing process for the bolometric detector according to claim 1, in which a first auxiliary sacrificial layer (10) is formed on a substrate (1), the layer of bolometric material (5) and the electrodes are formed on this first auxiliary layer, by electrically isolating the second areas of electrodes from the layer of bolometric material and eliminating the first auxiliary layer.

10. Process according to claim 9, for manufacturing the bolometric detector of claim 2, in which a layer of electrically insulating material is also formed (6) to separate the second areas of the layer of bolometric material (5).

11. Process according to claim 9 for manufacturing the bolometric detector of claim 4, in which a second auxiliary sacrificial layer (6) is also formed to separate the second areas from the layer of bolometric material (5), and this second auxiliary layer is also eliminated (6).


**Patentansprüche**

1. Bolometrischer Detektor mit einer Schicht aus bolometrischem Material (5) und wenigstens zwei Elektroden, welche gegenüber derselben Fläche dieser Schicht aus bolometrischem Material und ausgehend von ein und derselben Schicht aus elektrisch leitendem Material (8) gebildet sind, wobei dieser Detektor **dadurch gekennzeichnet ist, daß** jede der beiden Elektroden wenigstens eine erste Zone (7A, 7B) und wenigstens eine zweite Zone (8A, 8B, 8C) aufweist, daß die jeweils den beiden Elektroden zugehörigen zweiten Zonen voneinander elektrisch isoliert sind und von der Schicht aus bolometrischem Material (5) elektrisch isoliert sind und daß die jeweils den beiden Elektroden zugehörigen ersten Zonen voneinander beabstandet und in elektrischem Kontakt mit dieser Schicht aus bolometrischem Material (5) sind.

2. Detektor nach Anspruch 1, bei dem die zweiten Zonen (8A, 8B, 8C) von der Schicht aus bolometrischem Material (5) durch eine Schicht aus elektrisch isolierendem Material (6) elektrisch isoliert sind.

3. Detektor nach Anspruch 2, bei dem das elektrisch isolierende Material aus der Gruppe ausgewählt ist, welche Siliziumnitrid und Siliziumdioxid umfaßt.

4. Detektor nach Anspruch 1, bei dem die zweiten Zonen (8A, 8B, 8C) von der Schicht aus bolometrischem Material (5) durch einen materiefreien Zwischenraum elektrisch isoliert sind.

5. Detektor nach einem beliebigen der Ansprüche 1 bis 4, bei dem das bolometrische Material aus der Gruppe ausgewählt ist, welche amorphes Silizium, Vanadiumoxide, amorphes SiGe und $Si_xGe_yC_z$ umfaßt, wobei $x \geq 0$, $y \geq 0$, $z \geq 0$ und $x+y+z=1$.

6. Detektor nach einem beliebigen der Ansprüche 1 bis 5, bei dem das elektrisch leitende Material Titannitrid ist.

7. Detektor nach einem beliebigen der Ansprüche 1 bis 6, mit einer Mikrobrücken-Struktur.

8. Bolometrischer Detektor mit Matrizenstruktur, welcher wenigstens zwei Detektoren nach einem beliebigen der Ansprüche 1 bis 7 umfaßt.

9. Verfahren zur Herstellung des bolometrischen Detektors nach Anspruch 1, bei dem eine erste Opfer-Hilfsschicht (10) auf einem Substrat (1) gebildet wird, die Schicht aus bolometrischem Material (5) und die Elektroden auf dieser ersten Hilfsschicht gebildet werden, indem die zweiten Zonen der Elektroden von der Schicht aus bolometrischem Material elektrisch isoliert werden, und die erste Hilfsschicht entfernt wird.

10. Verfahren nach Anspruch 9, zur Herstellung des Detektors nach Anspruch 2, bei dem ferner die Schicht aus dem elektrisch isolierenden Material (6) gebildet wird, um die zweiten Zonen von der Schicht aus bolometrischem Material (5) zu trennen.

11. Verfahren nach Anspruch 9, zur Herstellung des Detektors nach Anspruch 4, bei dem ferner eine zweite Opfer-Hilfsschicht (6) gebildet wird, um die zweiten Zonen von der Schicht aus bolometrischem Material (5) zu trennen, und bei dem ferner diese zweite Hilfsschicht (6) entfernt wird.

FIG. 1

FIG. 2

FIG. 3

EP 1 067 372 B1

FIG. 4

FIG. 5

13

FIG. 6 A

FIG. 6 B

EP 1 067 372 B1

FIG. 7 A

FIG. 7 B

FIG. 8 A

FIG. 8 B

FIG. 9 A

FIG. 9 B

FIG. 10 A

FIG. 10 B